# EUROPÄISCHE PATENTSCHRIFT

(11) **EP 0 348 700 B1**
(45) Veröffentlichungstag und Bekanntmachung des Hinweises auf die Patenterteilung: **12.01.1994**
(21) Anmeldenummer: 89110195.8
(22) Anmeldetag: 06.06.1989
(51) Int. Cl.: B60R 1/06

(54) **Aussenspiegel für ein Kraftfahrzeug mit Rückwärtsgang**
External mirror for a motor vehicle with a reverse gear
Rétroviseur extérieur pour véhicule automobile comportant une marche arrière

(30) Priorität: 09.06.1988 DE 3819597; 19.01.1989 DE 3901442
(43) Veröffentlichungstag der Anmeldung: 03.01.1990
(73) Patentinhaber: HOHE KG, D-97903 Collenberg (DE)
(72) Erfinder: Kaspar, Rudolf, D-6981 Collenberg (DE)
(74) Vertreter: Zinngrebe, Horst, Dr.rer.nat.

(56) Entgegenhaltungen:
- EP-A- 0 170 114
- DE-A- 3 727 288
- FR-A- 2 585 200
- GB-A- 2 148 814
- JP-A- 5 867 538
- PATENT ABSTRACTS OF JAPAN, Band 7, Nr. 159 (M-228)[1304], 13. Juli 1983;
- PATENT ABSTRACTS OF JAPAN, Band 8, Nr. 80 (M-289)[1517], 12. April 1984;& JP-A-58 224 829 (NITSUSAN SHIYATAI K.K.) 27-12-1983

## Beschreibung

Die Erfindung betrifft einen Außenspiegel für ein Kraftfahrzeug mit einem an dem Kraftfahrzeug befestigbaren Spiegelgehäuse, welches einen um wenigstens eine Achse verschwenkbaren und über ein Verbindungsglied mit einem Stellmotor gekoppelten Spiegel trägt, wobei in einen Stromversorgungskreis für den Stellmotor ein Umschalter für die Drehrichtung des Stellmotors geschaltet ist und wobei ein Steuerorgan für einen Rückwärtsgang des Kraftfahrzeuges mit dem Umschalter zu dessen Betätigung sowie mit einem voreingestellten Wegbegrenzer für die Drehbewegung des Verbindungsgliedes gekoppelt ist. Ein solcher Außenspiegel ist zum Beispiel aus dem Dokument JP-A-58-67538 oder JP-A-58-224827 schon bekannt.

In der DE-A-2 715 575 ist ein Außenspiegel für ein Kraftfahrzeug beschrieben, in dessen Spiegelgehäuse ein Stellmotor zum Verstellen eines Rückspiegels befestigt ist. Der Stellmotor ist über ein Untersetzungsgetriebe mit dem Spiegel gekoppelt, so daß letzerer bei entsprechender Aktivierung des Stellmotors um eine Achse verdreht werden kann. Wenn der Außenspiegel an dem Kraftfahrzeug befestigt ist, erstreckt sich diese Achse im wesentlichen horizontal vom Fahrzeug weg. Der Stellmotor kann vom Fahrer durch Betätigen eines Schalters solange aktiviert werden, bis der Spiegel die für die Sitzposition des Fahrers günstigste Stellung eingenommen hat.

Bei linksgesteuerten Fahrzeugen ist es üblich, auf der rechten Fahrzeugseite einen Außenspiegel anzubringen, der dem Fahrer beispielsweise bei Überholvorgängen das Geschehen rechts hinter seinem Fahrzeug sichtbar macht.

Besonderes Geschick wird vom Fahrer beim Einparken in Parklücken verlangt, insbesondere wenn die Parkfläche von einem erhabenen Bordstein begrenzt ist. Bei linksgesteuerten Fahrzeugen ist das hintere untere Ende des Fahrzeugs für den Fahrer durch den rechten Außenspiegel nicht einsehbar, es sei denn, der Fahrer verstellt den rechten Außenspiegel soweit nach unten, daß ihm die fehlende Sicht ermöglicht wird.

Eine derartige Verstellung des Außenspiegels erfordert daher eine zusätzliche Manipulation des Fahrers, die ihn vom eigentlichen Einparken ablenkt. Darüberhinaus besteht die Gefahr, daß der Fahrer bei Weiterfahrt die Rückstellung des Spiegels in die normale, die Sicht auf das Verkehrsgeschehen rechts hinter seinem Fahrzeug ermöglichende Stellung vergißt bezw. wegen der Stellung des Fahrzeugs nicht mehr einstellen kann, so daß der verstellte rechte Außenspiegel im Bedarfsfall nicht das erwartete Sichtfeld wiedergibt.

Aus dem Dokument JP-A-58-67538 ist ein Außenspiegel für ein Kraftfahrzeug mit Rückwärtsgang bekannt, bei welchem ein Fühler zur Feststellung einer Fahrtrichtungsänderung einen Mikroprozessor beaufschlagt. Der Mikroprozessor veranlaßt bei Empfang entsprechender Signale aus dem Fühler einen Antriebsmotor für den Spiegel letzeren um einen vorbestimmten Winkel zu drehen. In dem Dokument JP-A-58-224829 ist zu dem gleichen Zweck eine elektronische Schaltung vorgesehen, welche bei Feststellung einer Rückwärtsfahrt den Spiegel durch entsprechende Beaufschlagung seines Antriebsmotors um einen vorbestimmten Winkelbetrag kippen läßt.

Der Erfindung liegt mithin die Aufgabe zugrunde, einen Außenspiegel für ein Kraftfahrzeug mit Rückwärtsgang zu schaffen, der dem Fahrer beim Rückwärts-Einparken eine wirksame, mit wenigen Bauteilen kostengünstig zu realisierende Sichthilfe bietet, ohne die während der Fahrt erforderliche Sicht nach hinten zu erschweren.

Dazu ist bei dem eingangs genannten Außenspiegel erfindungsgemäß vorgesehen, daß der Wegbegrenzer eine vom Steuerorgan betätigbare elektromagnetische Kupplung mit zwei Kupplungsteilen aufweist.

In bevorzugter Ausgestaltung der Erfindung ist vorgesehen, daß eines der Kupplungsteile mit einer axialen Nase in eine Ausnehmung im anderen Kupplungsteil bei betätigter Kupplung eingreift. Das Verbindungsglied kann danach bei Aktivierung des Stellmotors nur soweit gedreht werden, als die Nase im Ausschnitt beweglich ist.

In zweckmäßiger Weiterbildung der Erfindung sitzt auf dem Verbindungsglied ein plattenförmiges Kupplungsteil unter Federdruck, welches mit einem ringförmigen Profil, etwa einer peripheren Verzahnung, versehen ist, in welche ein mit einem Gegenprofil versehene Stopelement bei Aktivierung der Kupplung eingreift.

Das Verbindungsglied kann die Abtriebswelle des Stellmotors oder alternativ ein Ritzel eines Untersetzungsgetriebes sein, welches zwischen Stellmotor und Spiegel vorgesehen ist.

Gemäß einer weiteren bevorzugten Ausführungsform der Erfindung weist ein elektronischer Wegbegrenzer einen voreingestellten Zähler auf, der ausgehend von einer Nullage die vom Gleichstrom-Stellmotor am Kommutator erzeugten Impulse bis zu einem voreingestellten Höchstzählstand zählt. Ist der Höchstzählstand erreicht, gibt der Zähler ein die weitere Stromversorgung des Stellmotors unterbrechendes Signal ab. Diese Ausführungsform der Erfindung enthält nur wenige preisgünstige elektroniche Bauteile und zeichnet sich durch hohe Betriebssicherheit und Verschleißfestigkeit aus. Der Höchstzählstand kann werksseitig eingestellt und danach bemessen werden, daß das Verbindungsglied eine zum erforderlichen Abkippen des Spiegels erforderliche Drehbewegung ausführen kann.

Die Erfindung wird nachstehend anhand der beigefügten Schemazeichnung im einzelnen erläutert. Es zeigen:
- Fig. 1:: eine schematische Darstellung zur Erläuterung der Funktionsweise einer ersten Ausführungsform eines Spiegelantriebs für einen Außenspiegel;
- Fig. 2:: eine schematische Stirnansicht der Vorrichtung nach Fig. 1;
- Fig. 3:: eine schematische Darstellung der Funktionsweise einer anderen Ausführungsform des Spiegelantriebs nach Fig. 1; und
- Fig. 4:: eine schematische Darstellung einer stirnseitigen Ansicht der Vorrichtung aus Fig. 3.

Die Erfindung eignet sich zum Einbau in einen Kraftfahrzeug-Außenspiegel, wie er in der DE-B-2 822 681 oder in der DE-A-3 226 435 beschrieben ist. Durch Vergleich des Inhalts der beiden Schriften ergibt sich, daß es für die Erfindung nicht darauf ankommt, ob wie bei der DE-B-2 822 681 der Spiegel relativ zum Spiegelgehäuse unbeweglich in diesem gehalten ist und die aus Spiegel und Gehäuse bestehende Baugruppe relativ zu einem am Kraftfahrzeug befestigbaren Spiegelfuß durch den Stellmotor elektrisch vom Inneren des Fahrzeuges aus verstellt werden kann, oder ob gemäß DE-A-3 226 435 der Spiegel innerhalb des mit dem Spiegelfuß fest (jedoch ggf. nach vorne und hinten klappbar) verbundenen Spiegelgehäußes durch den Stellmotor relativ zum Spiegelgehäuse verstellt werden kann. Entscheidend ist eine vom Stellmotor erzeugte Relativbewegung des Spiegels zu demjenigen Bauteil des Außenspiegels, auf welchem der Stellmotor fest befestigt ist.

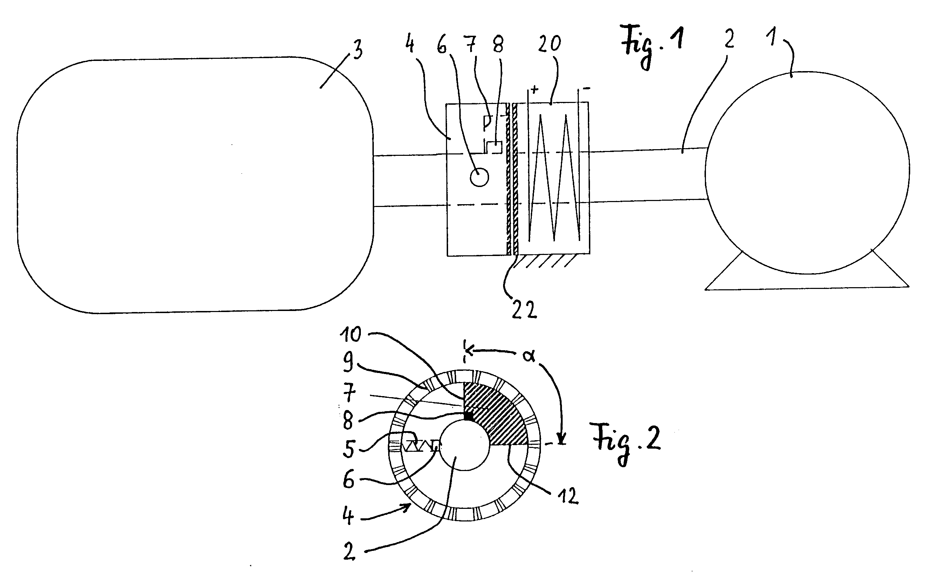

In der schematischen Darstellung der Erfindung nach Fig. 1 besitzt der Stellmotor 1, der dem Gleichstrommotor 11 aus der DE-B-2 822 681 oder dem Motor 40.2 aus der DE-A-3 226 435 entsprechen kann, ein Stellorgan 2, welches beispielsweise die Abtriebswelle des Stellmotors sein kann. Das bei aktiviertem Stellmotor 1 drehende Stellorgan 2 verstellt den Spiegel 3 in nicht dargestellter, jedoch aus den genannten Druckschriften bekannter Weise um eine nicht dargestellte Achse, die bei an das Kraftfahrzeug angebautem Außenspiegel im wesentlichen horizontal und quer zur Fahrtrichtung des Fahrzeugs weist.

Ein Stellorgan 2 durchdringt eine mittige Axialbohrung einer im wesentlichen zylindrischen Platte 4, welche in einer Radialbohrung eine von einer Feder 5 nach innen gedrückte Kugel 6 enthält. Die Feder 5 stützt sich in nicht dargestellter Weise beispielsweise über eine in die Bohrung eingeschraubte Gegenschraube an der Platte 4 ab. Die Kugel 6 greift bei der in Fig. 2 dargestellten Ausgangsstellung in eine kleine Einsenkung am Umfang des Stellorgans 2 ein und koppelt somit die Platte 4 mit dem Stellorgan 2. Daher nimmt die Platte 4 an den Drehbewegungen des Stellorgans 2 teil.

Die Platte 4 besitzt einen in Fig. 2 schraffiert dargestellten radialen Ausschnitt 7 in Umfangsrichtung, in welchem eine aus dem Stellorgan 2 radial vorstehende Nase 8 eingefangen ist. Der Ausschnitt 7 ist sektorförmig und erstreckt sich von der zentralen Bohrung der Platte 4, bis zu einem Zahnkranz 9 an der zum Stellorgan 2 querliegenden Peripherie der Platte 4.

Die Ausnehmung 7 erstreckt sich über einen Umfangswinkel Alpha, auf den noch eingegangen wird.

Das Stellorgan 2 ist von einer Magnetspule 20 umgeben, deren Anker 21 auf die mit der Verzahnung 9 versehene Stirnfläche der Platte 4 zuweist und an seinem Rand ebenfalls mit einer nicht im einzelnen dargestellten Verzahnung zum Eingriff in die Verzahnung 9 versehen ist. Die Magnetspule 20 ist ebenso wie der Stellmotor 1 relativ zum Spiegel 3 ortsfest.

Die beschriebene Vorrichtung arbeitet wie folgt:
Durch Betätigung etwa eines Schalters am Amaturenbrett (Cockpit) durch den Fahrer aktiviert dieser den Stellmotor 1 gegebenenfalls über eine nicht dargestellte Steuereinheit in der Weise, daß der Spiegel 3 als Bestandteil des bei links gelenktem Kraftfahrzeug rechten Außenspiegels die für den Fahrer richtige Stellung einnimmt, um ihm den Blick nach hinten während der Fahrt in üblicher Weise zu ermöglichen. Der durch die Aktivierung des Stellmotors 1 erzeugten Drehung des Stellorgans 2 folgt die Platte 4 schlupflos vermöge des Eingriffs der federbelasteten Kugel 6 in die Vertiefung des Stellorgans 2. Dabei sitzt die Nase 8 an einer Begrenzungskante 10 des Ausschnitts 7. Die Feder 5 ist so bemessen, daß die Anlage der Nase 8 an der Begrenzung 10 auch dann erhalten bleibt, wenn sich das Stellorgan 2 bei Betrachtung der Fig. 2 im Gegensinn des Uhrzeigers dreht.

Wenn der Fahrer den Spiegel 3 als Einparkhilfe verwenden möchte, wird im Kraftfahrzeug bei Einlegen des Rückwärtsgangs zunächst ein Stromkreis für die Magnetspule 20 geschlossen. Die daraufhin von der Magnetspule 20 entwickelte magnetische Anziehung zieht die Platte 4 um ein geringes Stück axial längs des Stellorgans 2 auf sich zu, bis die Verzahnungen 22 und 9 in Eingriff kommen. Dabei verläßt die Kugel 6 ihre stabile Lage in der Ausnehmung des Stellorgans 2. Es versteht sich, daß dazu der Ausschnitt 7 eine hinreichende axiale Tiefe besitzt, um die axiale Bewegung der Platte 4 relativ zur Nase 8 zu ermöglichen. Durch den Eingriff der Verzahnungen 9 und 22 ist die Platte 4 mit der Magnetspule 20 ortsfest gelegt, so daß diese nicht mehr mit dem Stellorgan 2 mitdrehen kann. Mit dem Einlegen des Rückwärtsgangs ist auch der Stellmotor 1 um eine vorgegebene Zeitspanne zu einer Drehrichtung aktiviert, die das Abwärtskippen des Spiegels 3 zur Folge hat. Die Zeitspanne reicht aus, die Nase 8 von der Anschlagkante 10 des Ausschnitts 7 bis gegen die gegenüberliegende Anschlagkante 12 des Ausschnitts 7 anlaufen zu lassen. Die im Stellmotor 1 üblicherweise vorhandene Rutschkupplung macht es unschädlich, daß der Stellmotor 1 gegebenenfalls funktionsbedingt länger läuft als die Bewegung der Nase 8 von der Anschlagkante 10 zur Anschlagkante 12 erfordert. Wenn die Nase 8 an der Anschlagkante 12 anliegt, ist der Spiegel 3 so gekippt, daß er dem Fahrer einen Blick auf das rechte Hinterrad und den rechten hinteren Teil seines Fahrzeugs erlaubt und somit die Kontrolle ermöglicht, ob er beispielweise den Bordstein oder dergleichen Hindernisse berührungslos beim Rückwärtssetzen seines Fahrzeugs passiert.

Wird der Rückwärtsgang herausgenommen, wird der Stellmotor 1 um die vorgegebene Zeitspanne in umgekehrter Drehrichtung aktiviert, so daß der Spiegel wieder in seine Ausgangslage zurückkehrt, bei der die Nase 8 innerhalb des Ausschnittssektors 7 zur Anschlagkante 10 zurückkehrt. Bei dieser Lage der Platte 4 relativ zum Stellorgan 2 befindet sich die Kugel 6 im Bereich der Ausnehmung im Stellorgan 2, so daß die Kugel 6 in der Ausnehmung in die stabile Lage unter der Wirkung der Feder 5 zurückkehrt, was eine axiale Verschiebung der Platte 4 relativ zur Magnetspule 20 um eine Strecke zur Folge hat, die die Verzahnungen 9 und 22 außer Eingriff bringt. Der Spiegel 3 hat damit seine Ausgangslage eingenommen. Sodann wird der Stromkreis für die magnetische Spule 20 unterbrochen, so daß sie keine magnetische Haltekraft auf die Platte 4 mehr ausübt. Die Arretiervorrichtung befindet sich wieder in der Ausgangssituation. Es versteht sich, daß Maßnahmen getroffen sind, die eine übliche Positionsverstellung des Spiegels während seines beschriebenen Betriebs als Einparkhilfe sperren.

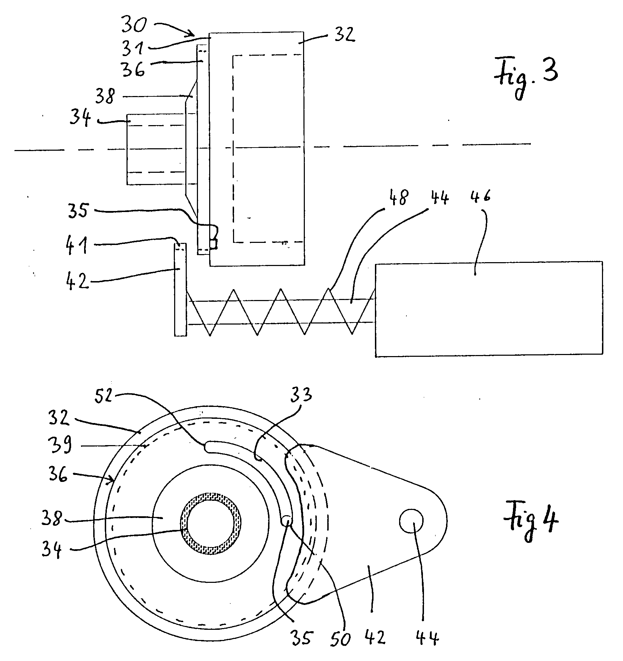

Eine andere Ausführungsform der Erfindung zeigen die Figuren 3 und 4. Ein im Ganzen mit 30 bezeichnetes Untersetzungsgetriebe ist in nicht dargestellter Weise mit dem Abtriebsritzel des nicht dargestellten Stellmotors gekoppelt. Ein erstes Gebtrieberad 32 besteht aus einem Käfig mit Innenverzahnung, aus dessen Basis mittig ein Ritzel 34 mit Außenverzahnung und kleinerem Durchmesser nach außen vorsteht. Eine kreisrunde Platte 36 ist mittels eines Federrings 38 gegen die auf das Ritzel 34 zuweisende Stirnwand 31 des Käfigs 32 in axialer Ausrichtung gehalten und weist dazu eine zentrale Bohrung 37 auf. Die Platte 36 kann vom freien Ende des Ritzels 34 her über letzteres gegen die Stirnwand 31 aufgeschoben werden, wobei das Ritzel 34 dann die Bohrung 37 durchdringt, und der das Ritzel 34 umgebende Federring 38 stützt sich in nicht dargestellter Weise auf dem Ritzel 34 ab. Aus der Platte 36 steht eine Nase 35 axial in einen kreisbogenförmigen Schlitz 33 vor, welcher von der Stirnseite 31 des Käfigs 32 her in dessen Basis eingeschnitten ist, und, wie Fig. 4 erkennen läßt, sich kreisbogenförmig um die Achse des Käfigs 32 um den Winkel Alpha erstreckt. Die Platte 36 ist an ihrer Peripherie mit einem Zahnkranz 39 versehen, in welchen der Zahnkranz 41 eines Stoppbleches 42 eingreifen kann. Das Stoppblech 42 sitzt am freien Ende eines Ankers 44 einer Magnetspule 46 und steht unter der Belastung einer Feder 48, welche das Stoppblech 42 mit Anker 44 von der Magnetspule 46 weg drückt und damit die Verzahnung 41 des Stoppbleches 42 normalerweise außer Eingriff mit dem Zahnkranz 39 der Platte 36 hält.

Das Ritzel 34 kann in nicht dargestellter Weise mit dem gezahnten Abschnitt eines mit dem nicht dargestellten Spiegel verbundenen Übertragungsgliedes kämmen, welches beispielsweise aus der letzterwähnten Deutschen Offenlegungsschrift bekannt ist. Die Magnetspule 46 ist relativ zum Spiegel ortsfest gehalten, also beispielsweise an dem Spiegelgehäuse in dem den Stellmotor umgebenden Becher befestigt.

Die Wirkungsweise dieser Ausführungsform der Erfindung entspricht derjenigen des ersten Ausführungsbeispiels. Soll der Spiegel als Parkhilfe dienen, wird bei Einlegen des Rückwärtsgangs die Magnetspule 46 aktiviert mit der Folge, daß das Stoppblech 42 gegen die Platte 46 und gegen die Wirkung der Feder 48 angezogen wird, so daß dessen Verzahnung 41 mit dem Zahnkranz 39 der Platte 36 in Eingriff kommt. Da das Stoppblech 42 unverdrehbar in der Magnetspule 46 gehalten ist, wird auch die Platte 36 an weiterer Drehung mit dem Getriebe 30 gehindert. Wenn der Stellmotor jetzt über die erwähnte vorgegebene Zeitspanne zur Drehung aktiviert wird, ergibt sich ein Schlupf zwischen dem Käfig 32 mit Ritzel 34 und der Platte 36 dergestalt, daß die Nase 35 sich in dem Längschlitz 33 von dessen erstem Ende 50 bis zu dessen anderen Ende 52 bewegt. Eine weitere Drehung des mit dem Käfig 32 einteiligen Ritzels 34 ist wegen der Arretierung der Platte 36 durch das Stoppblech 42 nicht mehr möglich. Beim Herausnehmen des Rückwärtsganges wird wie erwähnt der Stellmotor über die vorgegebene Zeitspanne zur Drehung in umgekehrtem Sinne aktiviert mit der Folge, daß der Käfig 32 mit Ritzel 34 eine Drehung relativ zur festgehaltenen Platte 36 derart ausführen, daß die Nase 35 vom Ende 52 zum Ende 50 des Schlitzes 33 gelangt. Der Spiegel hat jetzt wieder seine Ausgangslage eingenommen. Sodann kann der Stromversorgungskreis für die Magnetspule 46 unterbrochen werden, so daß die Platte 36 aus ihrer Arretierung gelöst wird und mit dem Untersetzungsgetriebe 30 ungehindert mitdrehen kann. Dabei ist die Federkraft des Federrings 38 so gemessen, daß die Platte 36 jeder Drehung des Getriebes 30 folgt, ohne daß die Nase 35 ihre Lage am Ende 50 des Schlitzes 33 verändert.

Die Größe des Winkels Alpha bestimmt sich ersichtlich danach, wieweit der Spiegel aus seiner Ausgangslage abgekippt werden muß, um dem Fahrer die Sicht auf das rechte Hinterrad bzw. den rechten hinteren Teil und dessen Umgebung zu gewähren.

Es versteht sich ferner, daß dem Fahrer die Inanspruchnahme der Einparkhilfe durch Abkippen des Spiegels durch entsprechende Betätigung oder Nichtbetätigung eines dafür am Armaturbrett vorgesehenen Schalters freigestellt sein sollte. Mit einem derartigen Zusatzschalter wird auch erreicht, daß die beschriebene Parkhilfe nur dann in Funktion tritt, wenn das Einlegen des Rückwärtsganges tatsächlich zum Einparken des Fahrzeugs geschieht. Es liegt weiterhin im Rahmen der Erfindung, nach Herausnahme des Rückwärtsganges den zur Parkhilfe abgekippten Spiegel erst nach einer Zeitverzögerung von etwa einer halben Minute durch entsprechend verzögerte Aktivierung des Stellmotors wieder in seine Ausgangslage zurückzuführen. Diese Zeitverzögerung trägt dem Umstand Rechnung, daß beim Einparken oft relativ häufig zwischen erstem Gang und Rückwärtsgang gewechselt und unter diesen Betriebsbedingungen verhindert werden soll, daß der Spiegel entsprechend häufig wieder in seiner Ausgangslage zurückkehrt und wieder abkippt.

## Patentansprüche

1. Außenspiegel für ein Kraftfahrzeug mit einem an dem Kraftfahrzeug befestigbaren Spiegelgehäuse, welches einen um wenigstens eine, Achse verschwenkbaren und über ein Verbindungsglied mit einem Stellmotor (1; 80) gekoppelten Spiegel (3) trägt, wobei in einen Stromversorgungskreis für den Stellmotor ein Umschalter (60) für die Drehrichtung des Stellmotors geschaltet ist, und wobei ein Steuerorgan (70) für einen Rückwärtsgang des Kraftfahrzeuges mit dem Umschalter (60) zu dessen Betätigung sowie mit einem voreingestellten Wegbegrenzer (4; 36; 98) für die Drehbewegung des Verbindungsgliedes (2, 30) gekoppelt ist, dadurch gekennzeichnet, daß der Wegbegrenzer eine vom Steuerorgan (70) betätigbare elektromagnetische Kupplung (20, 4; 46, 36) mit zwei Kupplungsteilen (4, 20; 36, 32) aufweist.

2. Außenspiegel nach Anspruch 1, dadurch gekennzeichnet, daß eines der Kupplungsteile mit einer axialen Nase (8; 35) in eine Ausnehmung (12; 33) des anderen Kupplungsteiles bei betätigter Kupplung eingreift.

3. Außenspiegel nach Anspruch 2, dadurch gekennzeichnet, daß die Ausnehmung (35) bogenförmig gestaltet ist.

4. Außenspiegel nach einem der Ansprüche 1 bis 3, dadurch gekennzeichnet, daß eine Magnetspule (20, 46) vorgesehen ist, deren Anker (22, 42) bei Aktivierung ein vom Verbindungsglied normalerweise mitgenommenes Kupplungsteil (4, 36) festlegt.

5. Außenspiegel nach einem der Ansprüche 1 bis 4, dadurch gekennzeichnet, daß auf dem Verbindungsglied (2, 30) ein plattenförmiges erstes Kupplungsteil (4, 36) unter Federdruck (5, 38), welches mit einem ringförmigen Profil, etwa peripheren Verzahnung (9, 39), vorgesehen ist, in welche ein mit einem Gegenprofil (22, 41) versehenes Stoppelement (22, 42) bei Aktivierung der Kupplung eingreift.

6. Außenspiegel nach einem der vorstehenden Ansprüche, dadurch gekennzeichnet, daß das Verbindungsglied die Abtriebswelle (2) des Stellmotors (1) ist.

7. Außenspiegel nach einem der Ansprüche 1 bis 6, dadurch gekennzeichnet, daß das Verbindungsglied ein Ritzel (32) eines Untersetzungsgetriebes (30) ist, welches zwischen Stellmotor (1) und Spiegel (3) vorgesehen ist.

## Claims

1. An external mirror for a motor vehicle with a mirror housing attachable to the motor vehicle and carrying a mirror (3) which is pivotable about at least one axis and is coupled with a servomotor (1; 80) via a connecting member, a change-over switch (60) for the direction of rotation of the servomotor being interconnected in a power supply circuit for the servomotor, and a control member (70) for a reverse motion of the motor vehicle being coupled with the change-over switch (60) for the actuation thereof and with a preadjusted path limiter (4; 36; 98) for the direction of rotation of the connecting member (2, 30), **characterised in that** the path limiter has an electromagnetic coupling (20, 4; 46, 36) with two coupling parts (4, 20; 36, 32), this electromagnetic coupling (20, 4; 46, 36) being actuable by the control member (70).

2. An external mirror according to Claim 1, **characterised in that** one of the coupling parts engages with an axial lug (8; 35) in a recess (12; 33) of the other coupling part when the coupling is actuated.

3. All external mirror according to Claim 2, **characterised in that** the recess (35) is arcuate.

4. All external mirror according to any one of Claims 1 to 3, **characterised in that** a magnetic coil (20, 46) is provided, whose armature (22, 42), when activated, secures a coupling part (4, 36) which is normally carried along by the connecting member.

5. An external mirror according to any one of Claims 1 to 4, **characterised in that** seated on the connecting member (2, 30) is a plate-shaped first coupling part (4, 36) which is under spring pressure (5, 38) and is provided with an annular profile, for example a substantially peripheral toothing (9, 39), in which a stopping element (22, 42) provided with a counter profile (22, 41) engages when the coupling is activated.

6. An external mirror according to any one of the preceding claims, **characterised in that** the connecting member is the driven shaft (2) of the servomotor (1).

7. An external mirror according to any one of Claims 1 to 6, **characterised in that** the connecting member is a pinion (32) of a step-down gear (30) provided between the servomotor (1) and the mirror (3).

## Revendications

1. Rétroviseur extérieur pour un véhicule avec un corps de rétroviseur pouvant être fixé au véhicule, lequel porte un miroir (3) pivotable autour au moins d'un axe et couplé à un servomoteur (1 ; 80) par l'intermédiaire d'un élément de liaison, un inverseur (60) pour le sens de rotation du servomoteur étant branché dans un circuit d'alimentation électrique pour le servomoteur, et un organe de commande (70) pour la marche arrière du véhicule étant couplé à l'inverseur (60) pour l'actionnement de celui-ci ainsi qu'à un limiteur de course (4 ; 36 ; 98) préréglé pour le sens de rotation de l'élément de liaison (2, 30), caractérisé en ce que le limiteur de course présente un accouplement électromagnétique (20, 4 ; 46, 36) à deux pièces d'accouplement (4, 20 ; 36, 32) actionnable par l'organe de commande (70).

2. Rétroviseur extérieur selon la revendication 1, caractérisé en ce que lorsque l'accouplement est actionné, l'une des pièces d'accouplement s'engage avec un ergot axial (8 ; 35) dans un évidement (12 ; 33) de l'autre pièce d'accouplement.

3. Rétroviseur extérieur selon la revendication 2, caractérisé en ce que l'évidement (35) est conformé en arc.

4. Rétroviseur extérieur selon l'une des revendications 1 à 3, caractérisé en ce qu'il est prévu une bobine d'excitation (20, 46), dont l'armature (22, 42) fixe, lors d'activation, une pièce d'accouplement (4, 36) normalement entraînée par l'élément de liaison.

5. Rétroviseur extérieur selon l'une des revendications 1 à 4, caractérisé en ce que sur l'élément de liaison (2, 30) il est prévu une première pièce d'accouplement en forme de plaque (4, 36) sous pression de ressort (5, 38), laquelle est munie d'une denture sensiblement périphérique (9, 39) avec un profil circulaire, dans laquelle s'engage un élément d'arrêt (22, 42) muni d'un contre-profil (22, 41) lors d'activation de l'accouplement.

6. Rétroviseur extérieur selon l'une des revendications précédentes, caractérisé en ce que l'élément de liaison est l'arbre de sortie (2) du servomoteur (1).

7. Rétroviseur extérieur selon l'une des revendications 1 à 6, caractérisé en ce que l'élément de liaison (2, 30) est un pignon (32) d'un réducteur (30) qui est prévu entre le servomoteur (1) et le miroir(3).
